# EUROPEAN PATENT SPECIFICATION

(11) **EP 2 622 859 B1**
(45) Date of publication and mention of the grant of the patent: **31.08.2016**
(21) Application number: 11767862.3
(22) Date of filing: 26.09.2011
(51) Int. Cl.: H04N 19/597, H04N 19/196, H04N 19/124, H04N 19/154, H04N 19/17

(54) **REGION BASED ASYMMETRIC CODING FOR 3D VIDEO COMPRESSION**
BEREICHSBASIERTE ASYMMETRISCHE CODIERUNG FÜR 3D-VIDEOKOMPRIMIERUNG
CODAGE ASYMÉTRIQUE BASÉ SUR LA RÉGION POUR UNE COMPRESSION VIDÉO 3D

(30) Priority: 05.04.2011 US 201161472112 P; 29.09.2010 US 387946 P
(43) Date of publication of application: 07.08.2013
(73) Proprietor: Dolby Laboratories Licensing Corporation, San Francisco, CA 94103-4813 (US)
(72) Inventor: YIN, Peng, Sunnyvale, California 94085 (US); PAHALAWATTA, Peshala V., Glendale, California 91202 (US); LEONTARIS, Athanasios, Mountain View, California 94043 (US); TOURAPIS, Alexandros, Milpitas California 95035 (US); STEC, Kevin J., Los Angeles California 90068 (US)
(74) Representative: Dolby International AB Patent Group Europe
(86) International application number: PCT/US2011/053218
(87) International publication number: WO 2012/050808

(56) References cited:
- TAM W J ET AL: "STEREOSCOPIC VIDEO: ASYMMETRICAL CODING WITH TEMPORAL INTERLEAVING", PROCEEDINGS OF SPIE, SPIE, US, vol. 4297, 22 January 2001 (2001-01-22), pages 299-306, XP008021785, ISSN: 0277-786X, DOI: 10.1117/12.430828
- TAM W J: "Image and depth quality of asymmetrically coded stereoscopic video for 3D-TV", 23. JVT MEETING; 80. MPEG MEETING; 21-04-2007 - 27-04-2007; SAN JOSÃ CR ,US; (JOINT VIDEO TEAM OF ISO/IEC JTC1/SC29/WG11 AND ITU-T SG.16 ),, no. JVT-W094, 19 April 2007 (2007-04-19), XP030007054, ISSN: 0000-0153
- FENG SHAO ET AL: "Stereoscopic video coding with asymmetric luminance and chrominance qualities", 94. MPEG MEETING; 11-10-2010 - 15-10-2010; GUANGZHOU; (MOTION PICTURE EXPERT GROUP OR ISO/IEC JTC1/SC29/WG11), no. M18520, 28 October 2010 (2010-10-28), XP030047110,
- UM G ET AL: "Investigation on the effect of disparity-based asymmetrical filtering on stereoscopic video", VISUAL COMMUNICATIONS AND IMAGE PROCESSING; 8-7-2003 - 11-7-2003; LUGANO, 8 July 2003 (2003-07-08), XP030080631,
- TAM W J ET AL: "CROSS-SWITCHING IN ASYMMETRICAL CODING FOR STEREOSCOPIC VIDEO", PROCEEDINGS OF SPIE, SPIE, US, vol. 4660, 21 January 2002 (2002-01-21), pages 95-104, XP008021654, ISSN: 0277-786X, DOI: 10.1117/12.468022
- SEUNTIENS P ET AL: "Perceived Quality of Compressed Stereoscopic Images: Effects of Symmetric and Asymmetric JPEG Coding and Camera Separation", ACM TRANSACTIONS ON APPLIED PERCEPTION, ASSOCIATION FOR COMPUTING MACHINERY, INC, NEW YORK, NY, US, vol. 3, no. 2, 1 April 2006 (2006-04-01), pages 95-109, XP009156294, ISSN: 1544-3558
- LEW STELMACH ET AL: "Stereo Image Quality: Effects of Mixed Spatio-Temporal Resolution", IEEE TRANSACTIONS ON CIRCUITS AND SYSTEMS FOR VIDEO TECHNOLOGY, IEEE SERVICE CENTER, PISCATAWAY, NJ, US, vol. 10, no. 2, 1 March 2000 (2000-03-01), XP011014038, ISSN: 1051-8215
- BRUST H ET AL: "Mixed resolution coding of stereoscopic video for Mobile devices", 3DTV CONFERENCE: THE TRUE VISION - CAPTURE, TRANSMISSION AND DISPLAY OF 3D VIDEO, 2009, IEEE, PISCATAWAY, NJ, USA, 4 May 2009 (2009-05-04), pages 1-4, XP031471537, ISBN: 978-1-4244-4317-8
- MEESTERS L M J ET AL: "A SURVEY OF PERCEPTUAL EVALUATIONS AND REQUIREMENTS OF THREE-DIMENSIONAL TV", IEEE TRANSACTIONS ON CIRCUITS AND SYSTEMS FOR VIDEO TECHNOLOGY, IEEE SERVICE CENTER, PISCATAWAY, NJ, US, vol. 14, no. 3, 1 March 2004 (2004-03-01), pages 381-391, XP001190162, ISSN: 1051-8215, DOI: 10.1109/TCSVT.2004.823398
- ALEXIS MICHAEL TOURAPIS ET AL: "A Frame Compatible System for 3D Delivery", 93. MPEG MEETING; 26-7-2010 - 30-7-2010; GENEVA; (MOTION PICTURE EXPERT GROUP OR ISO/IEC JTC1/SC29/WG11), no. M17925, 30 July 2010 (2010-07-30), XP030046515,
- KARCZEWICZ M ET AL: "R-D optimized quantization", 27. JVT MEETING; 6-4-2008 - 10-4-2008; GENEVA, ; (JOINT VIDEO TEAM OFISO/IEC JTC1/SC29/WG11 AND ITU-T SG.16 ),, no. JVT-AA026, 19 April 2008 (2008-04-19), XP030007369, ISSN: 0000-0091
- PHILIPP MERKLE ET AL: "Multi-View Video Plus Depth Representation and Coding", IMAGE PROCESSING, 2007. ICIP 2007. IEEE INTERNATIONAL CONFERENCE ON, IEEE, PI, 1 September 2007 (2007-09-01), pages I-201-I-204, XP031157713, ISBN: 978-1-4244-1436-9

## Description

### CROSS REFERENCE TO RELATED APPLICATIONS

This application claims priority to United States Provisional Patent Application No. 61/387,946 filed 29 September 2010 and United States Provisional Patent Application No. 61/472,112 filed 5 April 2011.

### TECHNOLOGY

The present Application relates to video processing, such as video coding. More particularly, an embodiment of the present invention relates to region based asymmetric coding, such as region based asymmetric coding for video compression.

### BACKGROUND

The provision of a stereoscopic (3D) user experience is a long held goal of both content providers and display manufacturers. For 3D video delivery, bandwidth is a major concern. 3D video contains information about two distinct views, one for each eye, which may result in potentially doubling the bitrate compared to 2D video coding system. In many systems, however, it may not be possible to consider such an increase in bandwidth to support 3D applications, whereas sacrificing quality to fit the 3D signal within the same bandwidth may be undesirable Thus, how to reduce the bandwidth for 3D video delivery ¹ without affecting the image quality is an issue for 3D video systems.

### BRIEF DESCRIPTION OF THE DRAWINGS

FIGURE 1 shows an exemplary representation of a side by side arrangement for the delivery of stereoscopic material.
FIGURE 2 shows a schematic representation of an exemplary system for Frame Compatible 3D video delivery.
FIGURE 3 shows a schematic representation of an exemplary system for Simulcast 3D video delivery.
FIGURE 4 shows a schematic representation of an exemplary system for MVC based 3D video delivery.
FIGURE 5 shows a schematic representation of a full resolution frame compatible (FCFR) based 3D video delivery.
FIGURE 6 shows an encoder diagram used in H.264.
FIGURE 7 shows an example of asymmetric coding for 3D video delivery where the left image is coded differently from the right image.
FIGURE 8 shows an example of a fixed QP adaptation pattern for region asymmetric, iew symmetric quality allocation.
FIGURE 9 shows a further example of a fixed QP adaptation pattern, with an almost symmetric quality allocation.
FIGURE 10 shows yet another example of a fixed QP adaptation pattern, with random QP assignment and an almost symmetric quality allocation.
FIGURE 11 shows an example of a view-overlapping QP pattern.
FIGURE 12 shows the use of object base pattern in a region based asymmetric coding pattern.
FIGURE 13 shows the use of depth based pattern in a region based asymmetric coding pattern.
FIGURE 14 shows the use of temporal variation in a region based asymmetric coding pattern.
FIGURE 15 shows use of asymmetric coding at the base layer and symmetric coding at the enhancement layer of a full resolution frame compatible (FCFR) system.
FIGURE 16 shows use of asymmetric coding both at the base layer and at the enhancement layer of a full resolution frame compatible (FCFR) system with the same pattern.
FIGURE 17 shows use of asymmetric coding both at the base layer and at the enhancement layer of a FCFR system with an alternating pattern.
FIGURE 18 shows a flow chart with a processing method for performing region based asymmetric coding.

### DESCRIPTION OF EXAMPLE EMBODIMENTS

According to a first aspect of the present disclosure, a method for processing video data is provided, comprising: providing video data representing a first view and a second view, the first view and the second view, each view comprising a plurality of regions; and asymmetrically processing the regions of the first view according to a first view processing pattern and asymmetrically processing the regions of the second view according to a second view processing pattern, wherein the first view processing pattern is different from the second view processing pattern.

According to a second aspect, a method for processing video data comprised of a plurality of frames each frame represented according to a first view and a second view, each view comprising a plurality of regions is provided, the method comprising: for each frame, evaluating a first view processing pattern and a second view processing pattern; for each frame, asymmetrically processing the regions of the first view according to a first view processing pattern and asymmetrically processing the regions of the second view according to a second view processing pattern, wherein, for each frame, the first view processing pattern is different from the second view processing pattern.

According to a third aspect, a method for encoding video data is provided, comprising: providing video data representing a first view and a second view, the first view and the second view, each view comprising a plurality of color components; and asymmetrically encoding the color components of the first view according to a first view encoding pattern and asymmetrically encoding the color components of the second view according to a second view encoding pattern, wherein the first view encoding pattern is different from the second view encoding pattern.

Further embodiments of the disclosure are shown in the specification, claims and drawings of the present application.

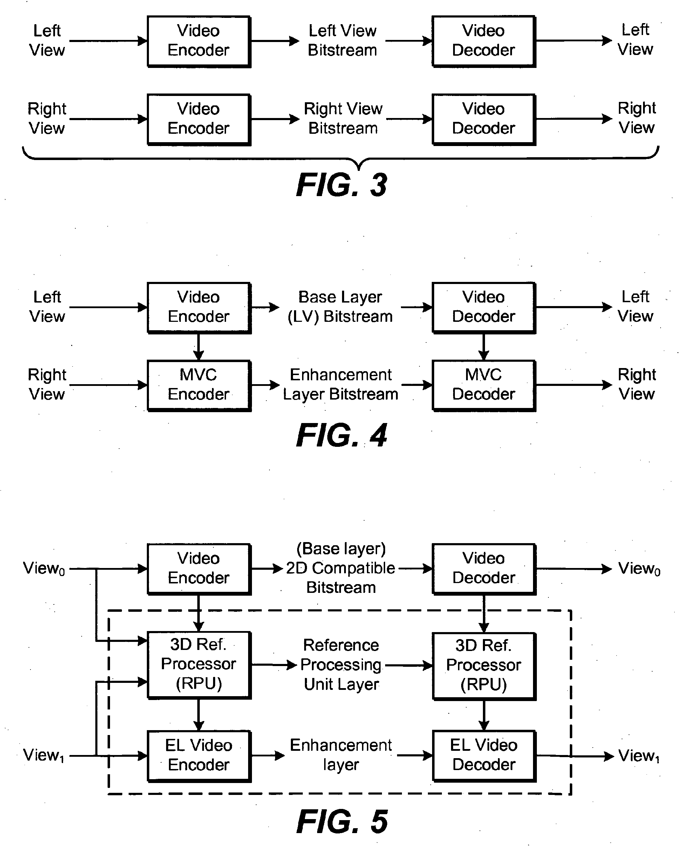

Several methods can be utilized to deliver 3D data. Methods include simulcast encoding and delivery of the different views (encoding and sending two views independently) (see, for example, FIGURE 3), the use of the Multiview Video Coding (MVC) extension of MPEG-4 AVC/H.264, the Scalable Video Coding (SVC) extension of H.264, Frame Compatible [see reference 1] 3D delivery methods, 2D+delta, 2D+depth, etc. In MVC, in addition to temporal and spatial prediction methods the correlation that may exist between two different views is also exploited (see, for example, FIGURE 4). In SVC the base layer represents one view and additional enhancement layers can be used to represent different views thus inter-layer redundancy can also be exploited. In Frame Compatible 3D delivery methods spatial correlation can be further exploited through cross-layer prediction. In 2D+delta the base layer contains one view and additionally an error difference is encoded, which in addition to the base layer is used to create the other view, whereas in 2D+depth only one view plus depth is coded and the decoder uses depth information to generate other views.

Other methods are also developed for next generation 3D TV activities which are primarily based on the combined use of multiview video coding and depth information [see reference 12].

Although many of these methods can result in reduced bandwidth compared to the simulcast approach, bandwidth reduction is still desired. A method used to further reduce bandwidth employs asymmetric coding and processing of the two views. This concept is based on the theories of binocular suppression [see references 4, 5 and 9]. The theory states that the final 3D perception is usually dominated by the higher-quality component of a stereo pair if both views are spatially and temporally properly aligned and the difference of the samples between the two views is not too significant, or the quality of the "lesser" view is within an acceptable range. Based on the above theory, one may select to encode one view with lower quality than the other view without introducing visible distortion artifacts in the binocular percept. In the presence of blocking artifacts, for example, the binocular quality of a stereo sequence tends to be close to the mean of the quality of both views.

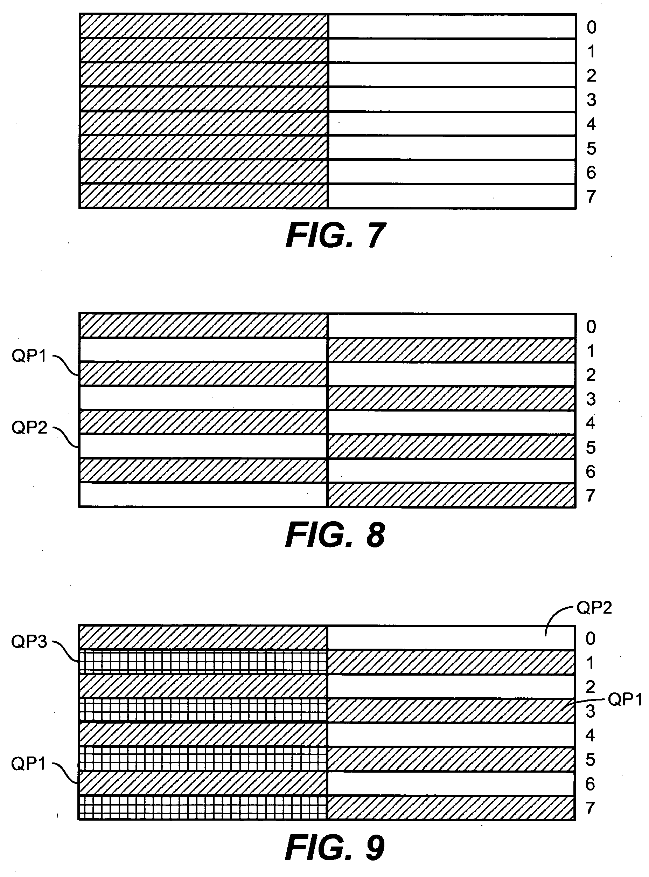

Lowering/degrading quality of a view can involve the consideration of blurring/filtering, the use of coarser compression (quantization), or the reduction of spatial and/or temporal resolution [see references 6, 7 and 8]. FIGURE 7 shows an example with Side-by-Side Frame Compatible 3D format: left view and right view have different quality. One issue of the above asymmetric coding approach is that the perceived quality may be affected depending on the eye dominance of the viewer. Studies have shown that left and right-eye dominance are equiprobable among viewers. Therefore it is highly likely that the reduced quality view may be presented to a viewer's dominant eye, in which case, the masking effect may be less effective. Furthermore, other experiments suggest that the quality difference between the views may increase the probability of or aggregate viewer fatigue. Reference [7] proposes to use cross switching for asymmetric coding, which alternates asymmetry from one view to another view at scene cuts, in an effort to reduce viewer fatigue and to avoid motion jerkiness. However, the method could still not overcome the eye-dominance issue, whereas its use may also be limited due to the characteristics of the encoding process, such as rate control restrictions, backwards compatibility and playback of the base layer on legacy devices which may make reduced quality of this layer undesirable etc.

All of the above asymmetric 3D video coding approaches usually consider imposing quality asymmetry in one view, thus making one view being of higher quality than the other. This level of asymmetry has been restricted at the picture level, and will therefore be referred to as picture-level or view-level asymmetry.

In the present disclosure, techniques that impose asymmetry at the region level, but at the same time may consider overall/average symmetry or significantly reduced asymmetry at the picture/view level, are presented. Throughout the present disclosure, the term "asymmetry" or "asymmetric" at the region level will be used to intend that not all of the regions of a picture or view are processed (e.g., pre-filtered or coded) in the same way, meaning that some regions are processed differently from others.

Region asymmetry may consider coding as well as prefiltering of the content. The techniques proposed in the present disclosure could be applied to any 3D coding method, including 2D + delta, MVC, simulcast, and frame compatible coding. The methods of the present disclosure could also be applied to Full Resolution Frame Compatible (FCFR) coding schemes [see reference 10]. In the context of FCFR coding [see again reference 10], where the base and enhancement layers both are likely to consist of frame compatible, e.g. side by side, over-under, and line interleaved among others, formats, the asymmetric coding concepts of the present disclosure can be extended to both the base and the one or more enhancement layers.

Without losing generality, frame-compatible coding formats will be used in the following paragraphs, as an example. However, the teachings of the present disclosure are also intended to encompass other compression formats, such as Simulcast, MVC, and SVC and could also be applied to multiple view scenarios. Applicants will use H.264/MPEG-4 AVC and Motion compensated DCT based video codecs as an example for the compression techniques presented herein. The person skilled in the art will understand that other coding techniques, such as JPEG Image coding, wavelets and other coding standards and methods can be applied.

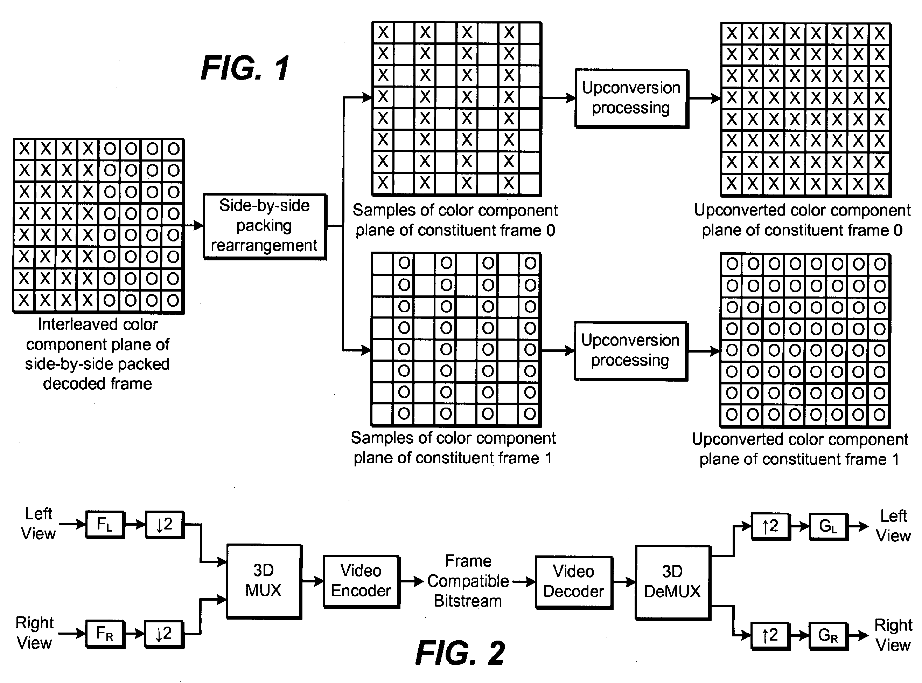

A Frame Compatible 3D video signal is created by first multiplexing the two stereo views into a single frame configuration through the consideration of a variety of filtering, sampling, and arrangement methods, as shown, for example, in FIGURE 2. Sampling could, for example, be horizontal, vertical, or quincunx, while an offset could also be considered between the two views allowing better exploitation of redundancies that may exist between the two views. Similarly, arrangements could include side by side, over-under, line-interleaved, and checkerboard packing among others. By way of example, FIGURE 1 shows a side by side arrangement. This frame configuration is then encoded and can be delivered to various devices for decoding and display. Multi-layered methods that can allow frame compatible signals to be reconstructed at higher or full resolution can utilize similar arrangements.

Although other methods such as filtering, adjusting the Lagrangian lambda and thresholding, as well as biasing coding modes among others could be used to illustrate and apply the teachings of the present disclosure, applicants will primarily focus, by way of example, on the application of different quantization. In case of filtering, a stronger low-pass filter (e.g., a blurring filter) can be used in one view and not in the other. In the case of biasing the coding modes, one view can bias more bitrate efficient modes than higher quality modes than the other, e.g. bias the selection of SKIP, Direct, 16x16, etc modes versus other higher precision modes. This could be done through changing for example the lagrangian lambda, or by limiting the mode decision to a smaller set of coding modes as an example.

In the context of H.264, quantization is adjusted primarily through the Quantization Parameter (QP) but also through the use of quantization matrices or other encoding techniques, such as quantization rounding, thresholding, or application of different Lagrangian parameters etc. In the case of quantization matrices, if both view samples belong to the same slice, then, since quantization matrices are dependent on the transform mode, different strength quantization matrices could be defined for lets say 4x4 and 8x8 modes, and samples in each view could be somehow biased to select one transform mode instead of the other. If separate slices are used, then different quantization matrices could be signaled instead. For quantization rounding and thresholding, a larger rounding offset or a larger threshold could be set for one view versus the other, respectively, whereas similar considerations could be used when applying a Lagrangian parameter, i.e. a larger Lagrangian (lambda) parameter would result in biasing the coding decision of a block towards lower bitrate.

### 1. Region based asymmetric quantization adaptation

According to an embodiment of the present disclosure, coding parameter, i.e. QP, assignment is switched for each view alternatively region by region. The region can be some fixed pattern (such as a macroblock row, a slice, a sequence of macroblocks, etc), or it can be decided using the characteristics of the signals, such as content activity, edges, depth/disparity information, region of interest etc.

According to an embodiment of the disclosure, the QP assignment is balanced for each view, so that somewhat similar, if not equal, average QP values are used for both views. This would result in an overall similar quality for the two views.

For the location, QP changes could happen at fixed, random or even adaptive (based on the view/signal characteristics) intervals. For QP value, QP changes (QP offset or delta QP) between regions for each view could be fixed, "random" or could even be adjusted based on the view/signal characteristics. QP variation can refer to either QP location change and/or QP value change. In one embodiment, the QP variation for asymmetric coding can be fixed for all the regions. In another embodiment, a set of values for allowable QP variation can be generated. Then for each region, a different QP value can be assigned using a random number generator and/or user intervention. QP values of macroblocks (MBs) within a region could be further adjusted given their spatio-temporal characteristics. For QP variation adaptation, for example, a smaller QP variation between corresponding regions of the two views can be considered for regions that appear closer to a viewer's eyes and a larger QP variation to regions that are farther away.

In a different embodiment, a smaller or no QP variation is considered at the region or regions of interest, whereas larger variations and/or larger QP parameters are considered for less important regions. A region or regions of interest could be user specified or defined as objects in the foreground, possibly extracted using a segmentation or depth estimation (objects appearing closer to the viewer) technique. In a further embodiment, smaller or no QP variation between corresponding regions of the two views is considered for regions that may have higher impact to the subjective or objective quality of a scene, whereas higher QP variations between corresponding regions of the two views are considered for regions with lesser subjective or objective quality impact. Specifically, the same QP can be assigned to the edges for both views, but for the regions everywhere else, asymmetric coding can be applied and higher QP variation between corresponding regions of the two views can be allowed. This characterization could, for example be made using brightness/contrast analysis, texture and/or edge analysis, and motion among others.

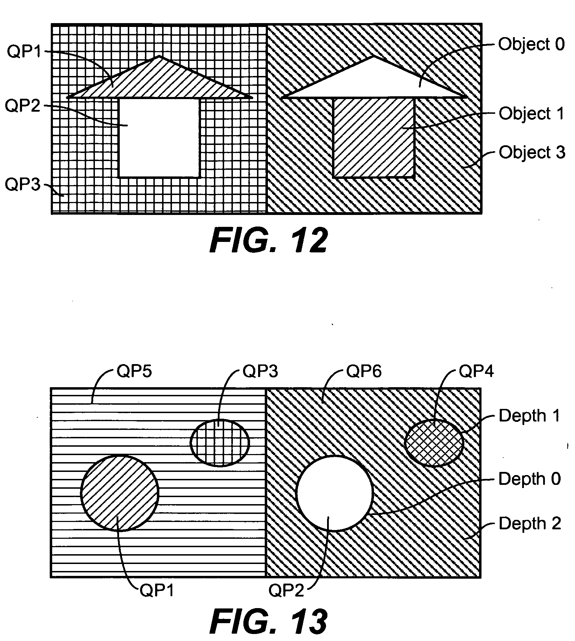

In a further embodiment, the QP variation and pattern are used in order not to cause any "QP Pop-up" effect, which may be caused by the use of different QP assignments. To overcome this, when QP is allocated to each region, QPs can be adjusted smoothly within one picture. For example, when assigning the quantization parameter for one view, if the first region is allocated a quantization parameter value equal to QP, then the quantization parameter of the second region can be assigned to QP+1, that of the third region to QP+2, and so on. For another view, the first region can be assigned to QP+1, the second region to QP, and the third region to QP+3 as shown, by way of example, in FIGURE 13, later described.

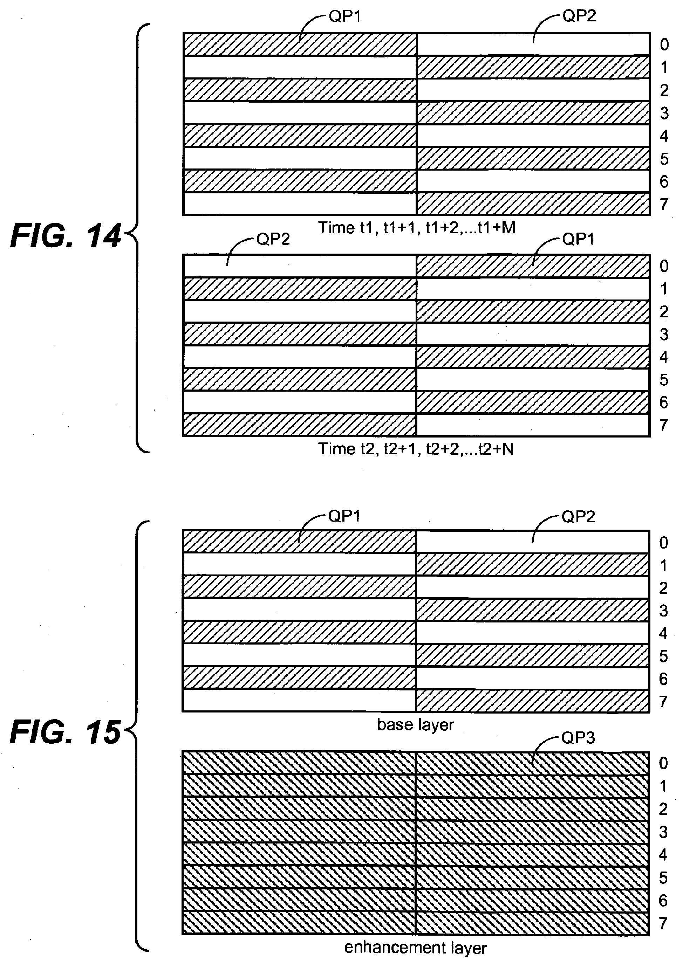

Temporal impact can also be considered in addition to spatial impact, if desired. Temporally, the pattern can be the same for the full sequence of views, or it can be adjusted adaptively, based on the characteristics of the signal, such as temporal segmentation of the scenes and motion trajectory. For example, as shown in FIGURE 14, later described, QP assignment can be temporally switched every frame, every group of pictures, every scene cut or randomly. Large changes can be avoided temporally, if desired. For example, if the asymmetric QP difference between views is not very small, switching the QP assignment for every frame can be avoided; otherwise, motion jerkiness or some cross distortion can be observed. Instead, QP assignment can be switched for every scene cut, at every GOP, when a new Instantaneous Decoder Refresh (IDR) frame is signaled, or when QP assignment should follow the motion of the objects. For example, similar QPs can be assigned to the same object when motion is small and QP switching between views with bigger QP difference can be performed only when motion has a large change too. In another embodiment, temporal periodic QP assignment can be avoided, such as switching QP assignment between views always by a fixed number, since the eye might pick up the periodicity and the viewer might feel very uncomfortable. A random or pseudo-random switching process could be used instead.

FIGURE 8 shows an example of a fixed QP adaptation pattern for region asymmetric, view symmetric quality allocation. In the representation of FIGURE 8 (and similarly, for the following FIGURES 9-11 and 14-17), the left view is represented on the left side of the figure and the right view is represented on the right side of the figure. By way of example, each view is represented as segmented in eight different rows of an exemplary macroblock of that view, numbered 0 through 7. In the example of FIGURE 8, two different QP values, QP1 = QP and QP2 = QP + offset, are assigned in an alternating macroblock row manner to each view. As shown in FIGURE 8, QP1 is marked in a forward slash pattern and QP2 is marked in white. In the left view, even macroblock rows are assigned to QP1 whereas QP2 is assigned to odd macroblock rows. Similarly, QP2 and QP1 are assigned to the right view's even and odd rows respectively. In this figure, the average QP values for each view are the same.

In the embodiment of FIGURE 9, a third QP3 = QP+offset+1 is added, marked in a rectangular cross hatch pattern. In the left view, even macroblock rows are assigned to QP1 whereas QP3 is assigned to odd macroblock rows. Similarly, QP2 and QP1 are assigned to the right views even and odd rows, respectively. In FIGURE 9, differently from what shown in FIGURE 8, the average QP of the left view is slightly higher than that of the right view and the overall view can be seen as almost symmetric.

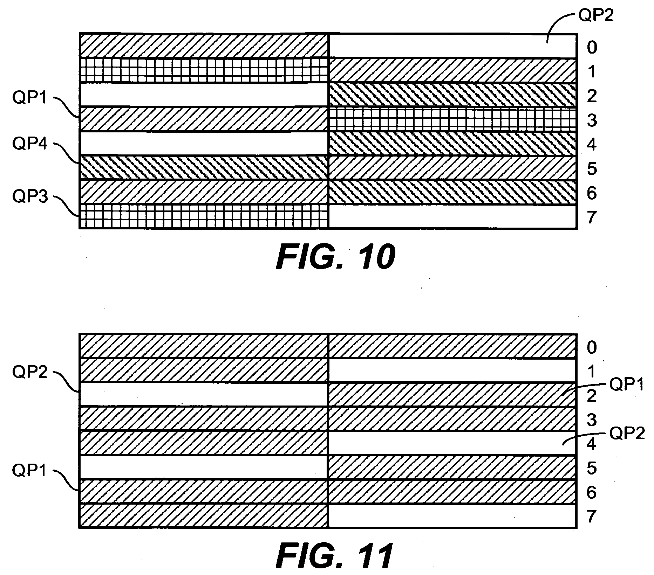

In the further embodiment shown in FIGURE 10, the offset between one QP and the other can be selected randomly from a set of values based on the view and the number of macroblock (MB) row. In other words, offset=random (view, #MB row). The offset can be, for example, limited to small values, such as {0, ±1, ±2, ±3}. Therefore, the average QP value of the left view will not differ very much from the average QP value of the right view. In the figure, QP1=QP is marked in a forward slash pattern, QP2=QP+1 is marked in white, QP3=QP+2 is marked in a rectangular cross hatch pattern, and QP4=QP+3 is marked in a backward slash pattern.

Quality asymmetry could also be controlled through adjusting the quality of the chroma parameters in addition to or instead of the luma. Further or lesser quality in the chroma components may be easier tolerated than adjusting the quality of the luma and this could be done again with chroma QP adjustments or by biasing coding decisions, thresholding, motion estimation or other parameters for the coding of chroma from one view to the other. Adjusting and biasing also different chroma components for one view versus the other may also be possible.

In the embodiments of FIGURES 9 and 10, the value of the offset and the height of the MB rows can be controlled, if desired, to avoid a "QP Pop-up" effect within an image.

FIGURE 11, on the other hand, shows an overlapped QP allocation design. In particular, in the embodiment of FIGURE 11, some regions have the same QP in both views, differently from what shown in the previous embodiments of FIGURES 8-10, where the QPs were alternating between views. The overlapped design tries to blur the boundary of different regions with an asymmetric switch of the QP between same regions of the two views. QP1 = QP and QP2 = QP + offset.

FIGURE 12 shows another embodiment of the present disclosure, where different regions of a view are based on object segmentation. In the embodiment of FIGURE 12, different QP values are assigned to each object depending on whether they belong to the left or the right view. The segmentation does not need to be very accurate, whereas a maximum and/or a minimum limit could be imposed on the size of the segmented object. This may help in better balancing quality and QP allocation (the average QP) across both views.

In the example of FIGURE 12, QP1=QP is marked in a forward slash pattern, QP2=QP+1 is marked in white, QP3=QP+2 is marked in a cross hatch rectangular pattern and QP4=QP+3 is marked in a backward slash pattern. In another example, QP can be assigned based on the region of interest. For example, for the edge of objects in each view in FIGURE 12, symmetric coding (similar QP) can be used. On the other hand, for the interior of the objects, QP can be assigned asymmetrically. In other words, while similar quality is allocated on the edges in the two views (since edges can be more important subjectively), the quality inside the objects is varied.

FIGURE 13 shows a further embodiment, where the regions of a view are based on depth/disparity information. The picture is first segmented into K different depth regions, for example through a disparity estimation process. By way of example, a K-means method can be used for clustering. In the example of FIGURE 13, the depth is increasing in accordance with the number used to mark the region. In other words, the depth of region 0 (depth 0) is smaller than the depth of region 1 (depth 1), and the depth of region 1 is smaller than the depth for region 2 (depth 2). In this example, a smaller QP variation can be assigned for regions that appear closer to the viewer's eyes and a larger QP variation can be assigned to regions that are farther away. In the embodiment of FIGURE 13, QP1 can be assigned to the 0-th depth 0 region marked in a forward slash pattern in the left view and QP2= QP1+1 for the 0-th depth region marked in white in the right view. This means that a decision has been made to bias the 0 region more in the left view than the right view, so that the left eye would have higher quality in that region. QP3=QP1+4 can then be chosen for the 1st depth region marked in a small rectangular pattern in the left view and QP4=QP1+2 for the 1st depth region marked in a diamond pattern in the right view. In this way, a decision has been made to bias the first region more in the right view than the left view, so that the right eye would have a better image on the first region, even though that would still be of slightly worse quality when compared to each of the views of the 0 region. Turning now to the second depth region, QP5=QP1+5 is used for the 2nd depth region (background) marked in a horizontal pattern in the left view and QP6=QP1+6 for the background in the right view marked in a backward slash pattern. In this way, there is higher quality in the left view with respect to the right view for the depth region. However, coding in the left view for depth region is worse than other regions in the same picture. Again, similarly to the object segmentation method mentioned with reference to FIGURE 12, depth segmentation can also take QP balance into consideration as shown in the present example, meaning that quality average is about equal for the two views.

FIGURE 14 shows an example of temporal variation of coding pattern. In this example, the first QP pattern will last, for example, M frames starting from t1, as shown in the left portion of FIGURE 14. At that point (time t2), the QP patterns can be switched between the two views, as shown in the right portion of FIGURE 14. This situation can last, for example, N additional frames. This process can be repeated as desired. The person skilled in the art will understand that the switching can be made for every frame, every group of pictures, every scene cut, or it can be based on some random patterns, or it can be decided by motion statistics etc. In FIGURE 14, QP1 = QP and QP2 = QP + offset. QP1 is marked in a forward slash pattern and QP2 is marked in white.

Turning now to the FCFR system, the same or different type of asymmetry can be applied for the base and one or more enhancement layers. In one embodiment, region asymmetric/view symmetric coding is applied in the base layer, whereas in the one or more enhancement layers, only symmetric coding is applied, as shown in FIGURE 15. In FIGURE 15, QP1 (forward slash pattern) represents the base QP for the base layer. QP3=QP1+3 (backward slash pattern) represents the base QP for the enhancement layer. The QP values used for asymmetric coding are QP2=QP1+1 (white pattern) for the base layer.

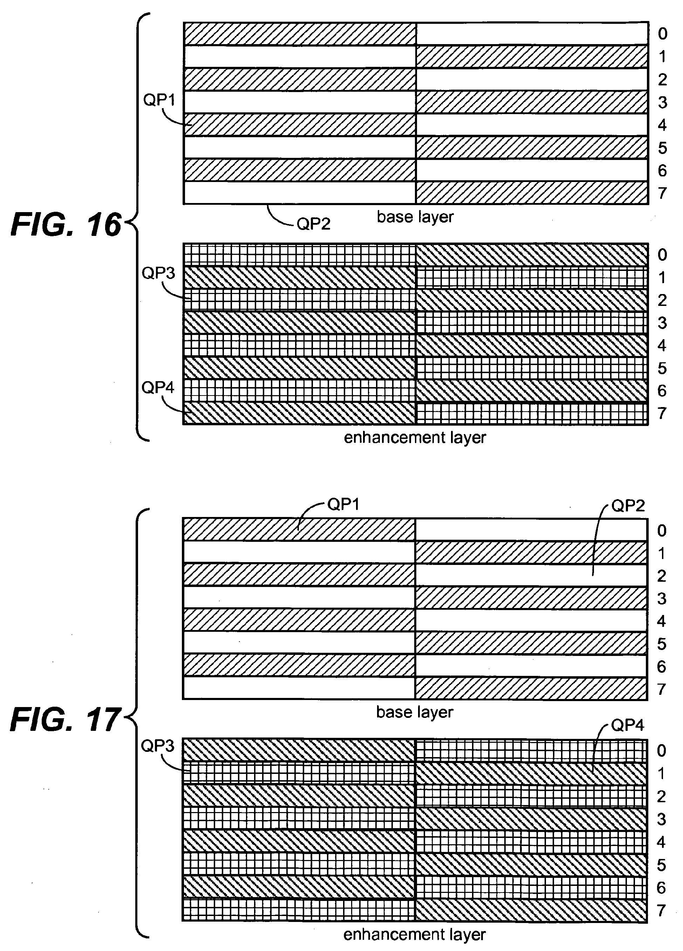

In another embodiment, asymmetric coding can be applied for both the base and the one or more enhancement layers. For example, the same QP variation pattern for each region is used for both the base and enhancement layers. FIGURE 16 shows an example. QP1 (forward slash pattern) represents the base QP for the base layer. QP3=QP1+3 (cross hatched rectangular pattern) represents the base QP for the enhancement layer. The QP values used for asymmetric coding are QP2=QP1+1 (white pattern) for the base layer and QP4=QP3+2 (backward slash pattern) for the enhancement layer, respectively. In the embodiment of FIGURE 16, the asymmetric pattern is the same for both the base and the enhancement layers. In other words, higher quality coding occurs in the right view in the even numbered rows both in the base layer and the enhancement layer. In yet another embodiment, region asymmetric coding is applied both at the base and enhancement layers, where the QP is alternated in the enhancement layer as compared to the base layer, as shown in FIGURE 17. QP1 (forward slash pattern) represents the base QP for the base layer. QP3=QP1+3 (cross hatched rectangular pattern) represents the base QP for the enhancement layer. The QP values used for asymmetric coding are QP2=QP1+1 (white pattern) for the base layer and QP4=QP3+2 (backward slash pattern) for the enhancement layer, respectively. Therefore, in the embodiment of FIGURE 17, higher quality coding occurs in the right view in the even numbered rows in the base layer, while higher quality coding occurs in the right view in the odd numbered rows in the enhancement layer.

According to a further embodiment, different regions could be defined for base vs enhancement layers. By way of example, the enhancement layer could be using bigger regions or using region analysis, while the base layer could operate on a fixed pattern, or vice versa.

The person skilled in the art will understand that the above teachings can easily be generalized for encoding sequences with more views and more enhancement layers.

### 2. Interaction with other coding factors

In the present disclosure, the image quality of the alternating regions for each view is degraded on purpose. This may have some impact on other encoding and decoding factors, such as pre-processing, pre-analysis, motion estimation, mode decision, rate control, and post-processing among others. Therefore, these can be taken into consideration to further improve coding performance given the characteristics of the asymmetric quality allocation. Some example methods of how these factors could be considered and improved are presented.

### Lagrangian Optimization - Lagrangian Multipliers

In many modern encoders, such as the H.264 JM reference software, Lagrange optimization in the form J=D+lambda*R is used to determine the best motion vector for each mode as well as the best mode for each macroblock. Here D represents distortion, which could be based on a variety of metrics, such as the Sum of Absolute Differences (SAD), Sum of Square Errors (SSE), or other metrics including subjective evaluation among others, and could be based on prediction only or final reconstruction after full encoding. R represents an estimate or the actual value of the bitrate required for encoding a certain motion vector or coding mode, which may include apart from mode information such as mode index, motion vectors, reference index, qp information etc, also residual information. Lambda is commonly a constant factor, which is decided by the quantization process applied to the image, i.e. a masterQP, and may relate to also the slice type as well as other factors such as the use and coefficients of quantization matrices, qp characteristics of color components, and coding structure among others. In Lagrange optimization, for the overall optimization of the full picture, the same lambda is better used.

Due to macroblock based rate control or other encoder optimization considerations, such as Rate Distortion Optimization Quantization (RDOQ) [see reference 11], one may wish to apply a different QP for each macroblock. In this case, a masterQP can be defined, which is used to decide a common lambda for every macroblock. The masterQP is generally set as the initial QP "assignment" or QP "estimate" for the current slice and its value does not change within a slice/picture. It should be noted that although this value does not change, different QP values can still be used for different macroblocks within the same slice, as is also presented in our disclosure. In our invention, lambda computation also accounts for asymmetric QP allocation by considering a masterQP that is now a function of the different QP values used within a slice. The function can be, for example set as the average or weighted average, their minimum or maximum, or some other linear or non linear combination of these values.

### Rate Control

The asymmetric coding process described in the present disclosure can also be combined with any rate control system. In one example, MB level rate control may take into consideration the statistics of the same regions in both views jointly. Then the QP variation can be kept between the regions, and the formulae used for rate control can be adapted while considering this QP variation or, to be more specific, will generate an average QP value (QPrc) that will be used as the QP base for these two regions. The corresponding region in one view will be allocated a value of QPrc-N, and the equivalent region in the other view will be allocated a QP value of QPrc+N.

### Pre-processing or Pre-analysis

Region based asymmetric coding can require some prior knowledge to decide what is the best way for defining regions and QP allocation. This can be done in a pre-processing and/or a pre-analysis step. The encoder can later reuse some of the statistics generated earlier during pre-filtering, perform refinements thereof, or may even require some additional new statistics, such as disparity information. The consideration of asymmetric quality coding can also guide the pre-filtering process. For example, if it is known that one region is likely to use a larger QP, instead or in addition to an increase in QP, a stronger filter can be applied, or the boundaries between adjacent macroblocks can be filtered in such a way that QP variation and blocking artifacts become less visible.

### Post-processing

Since asymmetric coding is switched, according to some embodiments, region by region for each view, the joint design of post filtering is desirable. For example, filtering should be performed across boundaries that account for the difference in quality across regions. A stronger filter might be needed when QP variation is bigger across the boundary of different regions. For FCFR, if different asymmetry is used for the base and the enhancement layer, post-processing should be adjusted accordingly to account for asymmetries in quality not only within the same view but also for quality asymmetries between the base and enhancement layers. A post-processor could exploit such asymmetries in an attempt to improve the quality of the base or enhancement layer depending on how these asymmetries are designed.

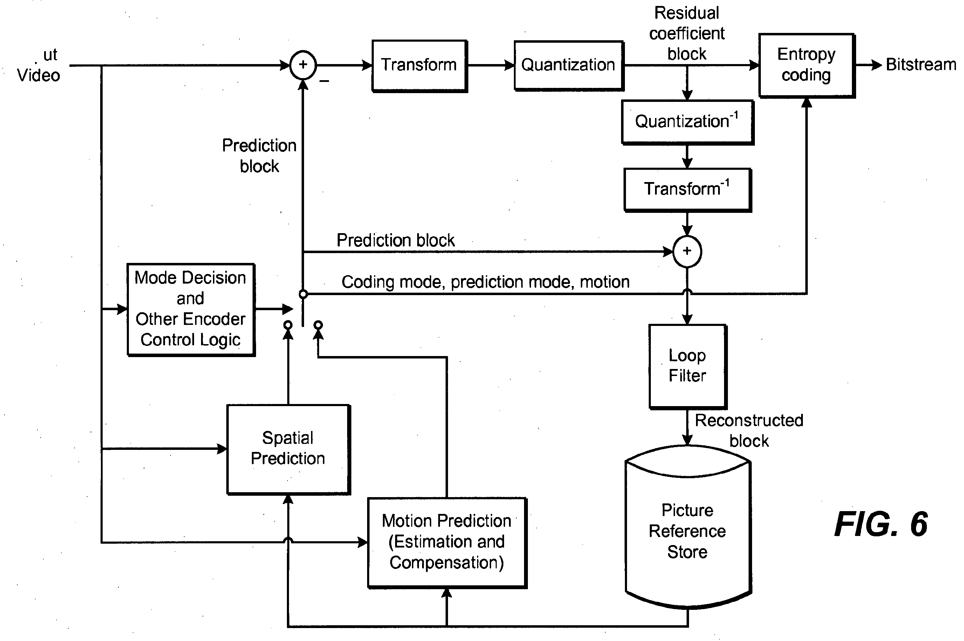

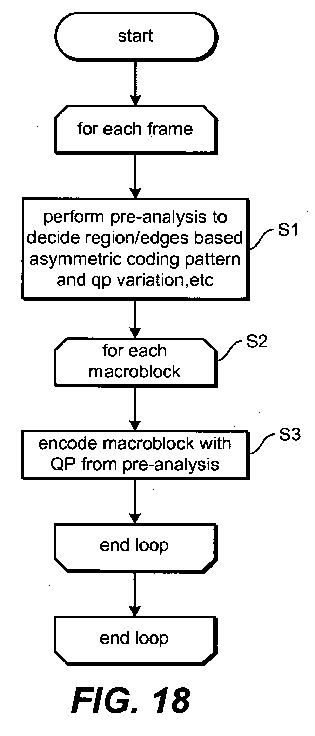

FIGURE 6 shows an example of an H.264 encoder diagram adapted to be used in accordance with the teachings of the present disclosure. FIGURE 18 shows an exemplary flowchart in accordance with the teachings of the disclosure.

In particular, FIGURE 18 shows a first pre-analysis step S1 where the extent of asymmetric coding is decided and a coding parameter (e.g. QP) for each region is decided. After that, encoding is performed in steps S2, S3 in accordance with the decisions taken in step S1.

FIGURE 6 shows an exemplary encoder that can be used with the teachings of the present disclosure. In particular, the pre-analysis step S1 mentioned above can be performed in the "Mode Decision and Other Encoder Control Logic" block of FIGURE 6. The exemplary encoder of FIGURE 6 is discussed, for example, in Figure 1 of US Provisional Application 61/241,130 filed on September 10, 2009.

The methods and systems described in the present disclosure may be implemented in hardware, software, firmware, or combination thereof. Features described as blocks, modules, or components may be implemented together (e.g., in a logic device such as an integrated logic device) or separately (e.g., as separate connected logic devices). The software portion of the methods of the present disclosure may comprise a computer-readable medium which comprises instructions that, when executed, perform, at least in part, the described methods. The computer-readable medium may comprise, for example, a random access memory (RAM) and/or a read-only memory (ROM). The instructions may be executed by a processor (e.g., a digital signal processor (DSP), an application specific integrated circuit (ASIC), or a field programmable logic array (FPGA)).

As thus described herein, an embodiment of the present invention may relate to one or more of the example embodiments, which are enumerated in Table 1, below. Accordingly, the invention may be embodied in any of the forms described herein, including, but not limited to the following Enumerated Example Embodiments (EEEs) which described structure, features, and functionality of some portions of the present invention.

| TABLE 1 |
|---|
| ENUMERATED EXAMPLE EMBODIMENTS |
| EEE1. A method for processing video data, comprising: |
| providing video data representing a first view and a second view, the first view and the second view, each view comprising a plurality of regions; and |
| asymmetrically processing the regions of the first view according to a first view processing pattern and asymmetrically processing the regions of the second view according to a second view processing pattern, |
| wherein the first view processing pattern is different from the second view processing pattern. |
| EEE2. The method of Enumerated Example Embodiment 1, wherein the step of asymmetrically processing the regions of the first view and the second view comprises the step of asymmetrically pre-filtering the regions of the first view and the second view. |
| EEE3. The method of Enumerated Example Embodiment 1, wherein the step of asymmetrically processing the regions of the first view and the second view comprises the step of asymmetrically coding the regions of the first view and the second view. |
| EEE4. The method of Enumerated Example Embodiment 3, wherein the step of asymmetrically coding the regions of the first view and the regions of the second view comprises the step of varying a coding parameter from region to region of the first view and varying a coding parameters from region to region of the second view. |
| EEE5. The method of Enumerated Example Embodiment 4, wherein the coding parameter includes one or more of a quantization parameter, a coding mode, quantization matrices, quantization rounding, quantization thresholding or application of different Lagrangian parameters. |
| EEE6. The method of Enumerated Example Embodiment 5, wherein the asymmetrical coding of the first view according to the first view coding pattern is balanced with respect to the asymmetrical cording of the second view according to the second coding pattern to minimize quality asymmetry. |
| EEE7. The method according to any one of Enumerated Example Embodiments 1-4, wherein the first view processing pattern is balanced with respect to the second view processing pattern to minimize quality asymmetry. |
| EEE8. The method according to any one of the previous Enumerated Example Embodiments, wherein each region is one or more macroblock rows of the first view or second view. |
| EEE9. The method according to any one of Enumerated Example Embodiments 1-7, wherein the regions are based on object segmentation. |
| EEE10. The method according to any one of Enumerated Example Embodiments 1-7, wherein each region is a depth region. |
| EEE11. The method according to Enumerated Example Embodiment 10, wherein the regions of the first view and the second view are asymmetrically coded according to the depth of said regions. |
| EEE12. The method according to Enumerated Example Embodiment 11, wherein asymmetrical coding occurs through assignment of different quantization parameters. |
| EEE13. The method according to any one of Enumerated Example Embodiments 1-7, wherein each region is a portion of the first view and second view. |
| EEE14. The method according to any one of Enumerated Example Embodiments 1-7, wherein each region is based on features of the video data to be processed. |
| EEE15. The method of Enumerated Example Embodiment 14, wherein the features include one or more of content activity, edges, depth information, disparity information, and region of interest of the video data to be processed. |
| EEE16. The method according to any one of the previous Enumerated Example Embodiments, wherein the first view and the second view are adapted to be combined to form stereoscopic video data. |
| EEE17. The method according to any one of the previous Enumerated Example Embodiments, wherein the first view and the second view are part of a multi-view arrangement. |
| EEE18. The method of Enumerated Example Embodiment 1, wherein the video data representing the first view and the second view are provided on a base layer and one or more enhancement layers and are adapted to be multiplexed in a frame compatible 3D video signal. |
| EEE19. The method of Enumerated Example Embodiment 4, wherein the coding parameter varies between a region of the first view and a corresponding region of the second view for all regions of the first view and second view. |
| EEE20. The method of Enumerated Example Embodiment 19, wherein the regions are macroblock rows and wherein, for each region of different views, the coding parameter varies between a first value in the first view and a second value in the second view for even rows |
| and between the second value in the first view and the first value in the second view for odd rows. |
| EEE21. The method of Enumerated Example Embodiment 19, wherein the regions are macroblock rows and wherein, for each region of different views, the coding parameter varies between a first value in the first view and a second value in the second view for even rows and between a third value in the first view and the first value in the second view for odd rows. |
| EEE22. The method of Enumerated Example Embodiment 19 wherein the coding parameter varies between a first value in the first view and a first value in a second view for a first set of regions in the first view and second view, and varies between the second value in the first view and the first value in the second view for a second set of regions in the first view and second view. |
| EEE23. The method of Enumerated Example Embodiment 19 wherein the coding parameter varies between a first value in the first view and a second value in the second view for a first set of regions in the first view and second view, and varies between a third value in the first view and the first value in the second view for a second set of regions in the first view and second view. |
| EEE24. The method of Enumerated Example Embodiment 22 or 23, wherein a region is a slice or a sequence of macroblocks. |
| EEE25. The method of Enumerated Example Embodiment 4, wherein the coding parameter varies between a region of the first view and a corresponding region of the second view for some regions of the first view and second view. |
| EEE26. The method of Enumerated Example Embodiments 19 or 25, wherein the coding parameter varies between two or more values. |
| EEE27. The method of any one of Enumerated Example Embodiments 19-26, wherein variation of the coding parameter is fixed, random or adjustable. |
| EEE28. The method of any one of Enumerated Example Embodiments 19-26, wherein the regions contain more relevant regions and less relevant regions, and wherein variation of the coding parameter for the more relevant regions is lower than variation of the coding parameter for the less relevant regions. |
| EEE29. The method of Enumerated Example Embodiment 28, wherein the more relevant regions include a region of interest. |
| EEE30. The method of Enumerated Example Embodiment 28, wherein the more relevant regions include edge regions. |
| EEE31. The method of any one of Enumerated Example Embodiments 28-30, wherein variation of the coding parameter for the more relevant regions is zero. |
| EEE32. The method according to any one of the previous Enumerated Example Embodiments, wherein the first view processing pattern and the second view processing pattern include smooth variation of a processing parameter between regions of a same view. |
| EEE33. The method according to any one of the previous Enumerated Example Embodiments, wherein the step of asymmetrically processing the regions of the first view according to a first view processing pattern and the step of asymmetrically processing the regions of the second view according to a second view processing pattern include temporal variation of the first processing pattern and the second processing pattern. |
| EEE34. The method of Enumerated Example Embodiment 33, wherein the temporal variation is adaptively adjustable. |
| EEE35. The method of Enumerated Example Embodiment 33 or 34, wherein the temporal variation is based on features of the video data. |
| EEE36. The method of Enumerated Example Embodiment 33 or 34, wherein the temporal variation occurs every frame, every group of frames, every group of pictures, every scene cut, randomly, or in accordance with motion statistics. |
| EEE37. The method of Enumerated Example Embodiment 25, wherein the coding parameter does not vary between corresponding views of the remaining regions. |
| EEE38. The method according to Enumerated Example Embodiment 18, wherein the first view processing pattern and the second view processing pattern of the base layer are the same of the first view processing pattern and the second view processing pattern of the one or more enhancement layers. |
| EEE39. The method according to Enumerated Example Embodiment 18, wherein the first view processing pattern and the second view processing pattern of the base layer are different from the first view processing pattern and the second view processing pattern of the one or more enhancement layers. |
| EEE40. The method according to Enumerated Example Embodiment 18, wherein asymmetric processing is applied to the base layer and not to the one or more enhancement layers. |
| EEE41. A method for processing video data comprised of a plurality of frames each frame represented according to a first view and a second view, each view comprising a plurality of regions, comprising: |
| for each frame, evaluating a first view processing pattern and a second view processing pattern; |
| for each frame, asymmetrically processing the regions of the first view according to a first view processing pattern and asymmetrically processing the regions of the second view according to a second view processing pattern, |
| wherein, for each frame, the first view processing pattern is different from the second view processing pattern. |
| EEE42. The method of Enumerated Example Embodiment 41, wherein the first view processing pattern and the second view processing pattern comprise a first view coding pattern and a second view coding pattern, respectively. |
| EEE43. The method of Enumerated Example Embodiment 42, wherein the first view coding pattern and the second view coding pattern comprise a first quantization parameter assignment pattern and a second quantization parameter assignment pattern, respectively. |
| EEE44. A method for encoding video data, comprising: |
| providing video data representing a first view and a second view, the first view and the second view, each view comprising a plurality of color components; and |
| asymmetrically encoding the color components of the first view according to a first view encoding pattern and asymmetrically encoding the color components of the second view according to a second view encoding pattern, |
| wherein the first view encoding pattern is different from the second view encoding pattern. |
| EEE5. The method of Enumerated Example Embodiment 44, wherein the color components of the first and second view are chroma parameters. |
| EEE46. An encoder for encoding a video signal according to the method recited in one or more of Enumerated Example Embodiments 1-45. |
| EEE47. An apparatus for encoding a video signal according to the method recited in one or more of Enumerated Example Embodiments 1-45. |
| EEE48. A system for encoding a video signal according to the method recited in one or more of Enumerated Example Embodiments 1-45. |
| EEE49. A computer-readable medium containing a set of instructions that causes a computer to perform the method recited in one or more of Enumerated Example Embodiments 1-45. |
| EEE50. Use of the method recited in one or more of Enumerated Example Embodiments 1-45 to encode a video signal. |

Furthermore, all patents and publications mentioned in the specification may be indicative of the levels of skill of those skilled in the art to which the disclosure pertains. All references cited in this disclosure are incorporated by reference to the same extent as if each reference had been incorporated by reference in its entirety individually.

The examples set forth above are provided to give those of ordinary skill in the art a complete disclosure and description of how to make and use the embodiments of the methods of the disclosure, and are not intended to limit the scope of what the inventors regard as their disclosure. Modifications of the above-described modes for carrying out the disclosure may be used by persons of skill in the video art, and are intended to be within the scope of the following claims.

It is to be understood that the disclosure is not limited to particular methods or systems, which can, of course, vary. It is also to be understood that the terminology used herein is for the purpose of describing particular embodiments only, and is not intended to be limiting. As used in this specification and the appended claims, the singular forms "a," "an," and "the" include plural referents unless the content clearly dictates otherwise. Unless defined otherwise, all technical and scientific terms used herein have the same meaning as commonly understood by one of ordinary skill in the art to which the disclosure pertains.

A number of embodiments of the disclosure have been described. Nevertheless, it will be understood that various modifications may be made without departing from the spirit and scope of the present disclosure. Accordingly, other embodiments are within the scope of the following claims.

### LIST OF REFERENCES

[1] Advanced video coding for generic audiovisual services, http://www.itu.int/rec/recommendation.asp?type=folders&lang=e&parent=T-REC-H.264, March 2009.
[2] JVT reference software version JM17.0, http://iphome.hhi.de/suehring/tml/download/
[3] Information technology -- MPEG video technologies -- Part 3: Representation of auxiliary video and supplemental information, ISO/IEC 23002-3:2007
[4] P. Senutients, L. Meesters and W. Ijsselsteijn, "Perceived Quality of Compressed Stereoscopic Images: Effects of Symmetric and Asymmetric JPEG Coding and Camera Separation", ACM Transactions on Applied Perception, Volume 3 Issue 2, pp.95-109, April 06
[5] W. Tam, "Image and depth quality of asymmetrically coded stereoscopic video for 3D-TV", JVT-W094, San Jose, California, USA, April 21-27, 2007
[6] L. B. Stelmach, W. J. Tam, D. Meegan, & A. Vincent, "Stereo image quality: Effects of mixed spatio-temporal resolution," IEEE Transactions on Circuits and Systems for Video Technology, Vol. 10, pp.188-193, 2000.
[7] W. J. Tam, L. B. Stelmach, F. Speranza, & R. Renaud, "Cross-switching in asymmetrical coding for stereoscopic video," Stereoscopic Displays and Virtual Reality Systems IX, Vol. 4660, pp. 95-104, 2002.
[8] H. Brust, A. Smolic, K. Mueller, G. Tech, and T. Wiegand, "Mixed Resolution Coding of Stereoscopic Video for Mobile Devices", 3DTV Conference: The True Vision - Capture, Transmission and Display of 3D Video, 2009
[9] L. M. J. Meesters, W. A. IJsselsteijn, and P. J. H. Seuntiëns. " A Survey of perceptual Evaluations and Requirements of Three-Dimensional TV", IEEE Transactions on CSVT, Vol. 14, NO. 3, March 2004
[10] A. Tourapis, P. Pahalawatta, A. Leontaris, Y. He, Y. Ye, K. Stec, W. Husak, " A Frame Compatible System for 3D Delivery", MPEG document, m17925, Geneva, July, 2007
[11] M. Karczewicz, Y. Ye, and P. Chen, "Rate distortion optimized quantization," ITU-T/SG16/Q.6 document C.462, Geneva, Switzerland, April 2008.
[12] P Merkle, A Smolic, K Muller, T Wiegand, "Multi-View Video Plus Depth Representation and Coding", ICIP 2007

## Claims

1. A method for processing video data, comprising:
providing video data representing a first view and a second view, each view comprising a plurality of regions; and
asymmetrically processing the regions of the first view according to a first view processing pattern and asymmetrically processing the regions of the second view according to a second view processing pattern;
wherein the step of asymmetrically processing the regions of the first view according to the first view processing pattern comprises the step of asymmetrically coding the regions of the first view, and asymmetrically processing the regions of the second view according to the second view processing pattern comprises the step of asymmetrically coding the regions of the second view;
wherein the step of asymmetrically coding the regions of the first view and the regions of the second view comprises the step of varying a coding parameter from region to region of the first view and varying a coding parameter from region to region of the second view,
wherein the first view processing pattern is different from the second view processing pattern
wherein the regions of view are based on object segmentation or are depth regions estimated through disparity segmentation.

2. The method as recited in Claim 1, wherein the step of asymmetrically processing the regions of the first view and the second view comprises the step of asymmetrically pre-filtering the regions of the first view and the second view.

3. The method as recited in Claim 1, wherein the coding parameter includes one or more of a quantization parameter, a coding mode, quantization matrices, quantization rounding, quantization thresholding or application of different Lagrangian parameters.

4. The method as recited in Claim 3, wherein the asymmetrical coding of the first view according to the first view processing pattern is balanced with respect to the asymmetrical coding of the second view according to the second view processing pattern to mmimize quality asymmetry.

5. The method according to any one as recited in Claims 1-2, wherein the first view processing pattern is balanced with respect to the second view processing pattern to minimize quality asymmetry.

6. The method according to any one of the previous claims, wherein each region is one or more macroblock rows of the first view or second view.

7. A method for processing video data comprised of a plurality of frames each frame represented according to a first view and a second view, each view comprising a plurality of regions, comprising:
for each frame, evaluating a first view processing pattern and a second view processing pattern;
wherein the step of evaluating the first view processing pattern and the second view processing pattern comprises performing pre-analysis on the first view and the second view to determine a coding parameter for each region in each of the first view and the second view;
for each frame, asymmetrically processing the regions of the first view according to the first view processing pattern and asymmetrically processing the regions of the second view according to the second view processing pattern;
wherein the step of asymmetrically processing the regions of the first view according to the first view processing pattern comprises the step of asymmetrically coding the regions of the first view, and asymmetrically processing the regions of the second view according to the second view processing pattern comprises the step of asymmetrically coding the regions of the second view;
wherein the step of asymmetrically coding the regions of the first view and the regions of the second view comprises the step of varying the coding parameter from region to region of the first view and varying the coding parameter from region to region of the second view, wherein, for each frame, the first view processing pattern is different from the second view processing pattern.
wherein the regions of view are based on object segmentation or are depth regions estimated through disparity segmentation.

8. A method for encoding video data, comprising:
providing video data representing a first view and a second view, each view comprising a plurality of color components; and
asymmetrically encoding the color components of the first view according to a first view encoding pattern and asymmetrically encoding the color components of the second view according to a second view encoding pattern;
wherein the step of asymmetrically encoding the color components of the first view according to the first view encoding pattern comprises the step of varying a coding parameter from region to region of the first view, and the step of asymmetrically encoding the color components of the second view according to the second view encoding pattern comprises the step of varying a coding parameter from region to region of the second view,
wherein the first view encoding pattern is different from the second view encoding pattern wherein the regions of view are based on object segmentation or are depth regions estimated through disparity segmentation.

9. A system, comprising: means for performing a method as recited in one or more of Claims 1-8.

10. An apparatus, comprising:
a processor; and
a computer readable storage medium, comprising encoded instructions that are tangibly coded therewith, which when executed by the processor, cause, control, program or configure the processor to perform a method as recited in one or more of Claims 1-8.

11. A computer readable storage medium comprising encoded instructions that are tangibly coded therewith, which when executed by a processor, cause, control, program or configure the processor to perform, cause, or control a method as recited in one or more of Claims 1-8.

## Patentansprüche

1. Verfahren zur Bearbeitung von Videodaten, umfassend:
Bereitstellen von Videodaten, die eine erste Ansicht und eine zweite Ansicht darstellen, wobei jede Ansicht mehrere Bereiche umfasst, und
asymmetrisches Bearbeiten der Bereiche der ersten Ansicht gemäß einem ersten Ansichtsbearbeitungsmuster und asymmetrisches Bearbeiten der Bereiche der zweiten Ansicht gemäß einem zweiten Ansichtsbearbeitungsmuster,
wobei der Schritt zum asymmetrischen Bearbeiten der Bereiche der ersten Ansicht gemäß dem ersten Ansichtsbearbeitungsmuster den Schritt zum asymmetrischen Codieren der Bereiche der ersten Ansicht umfasst und das asymmetrische Bearbeiten der Bereiche der zweiten Ansicht gemäß dem zweiten Ansichtsbearbeitungsmuster den Schritt zum asymmetrischen Codieren der Bereiche der zweiten Ansicht umfasst,
wobei der Schritt zum asymmetrischen Codieren der Bereiche der ersten Ansicht und der Bereiche der zweiten Ansicht den Schritt zum Verändern eines Codierungsparameters von Bereich zu Bereich der ersten Ansicht und zum Verändern eines Codierungsparameters von Bereich zu Bereich der zweiten Ansicht umfasst,
wobei sich das erste Ansichtsbearbeitungsmuster vom zweiten Ansichtsbearbeitungsmuster unterscheidet,
wobei die Ansichtsbereiche auf einer Objektsegmentierung beruhen oder Tiefenbereiche sind, die über eine Disparitätssegmentierung abgeschätzt wurden.

2. Verfahren nach Anspruch 1, wobei der Schritt zum asymmetrischen Bearbeiten der Bereiche der ersten Ansicht und der zweiten Ansicht den Schritt zum asymmetrischen Vorfiltern der Bereiche der ersten Ansicht und der zweiten Ansicht umfasst.

3. Verfahren nach Anspruch 1, wobei der Codierungsparameter eines oder mehreres von dem Folgenden umfasst: Quantisierungsparameter, Codierungsmodus, Quantisierungsmatrizen, Quantisierungsrundung, Quantisierungs-Schwellwertbildung oder Anwendung verschiedener Lagrange-Parameter.

4. Verfahren nach Anspruch 3, wobei das asymmetrische Codieren der ersten Ansicht gemäß dem ersten Ansichtsbearbeitungsmuster abgeglichen ist mit Bezug auf das asymmetrische Codieren der zweiten Ansicht gemäß dem zweiten Ansichtsbearbeitungsmuster, um die Qualitätsasymmetrie zu minimieren.

5. Verfahren nach einem der Ansprüche 1-2, wobei das erste Ansichtsbearbeitungsmuster bezüglich des zweiten Ansichtsbearbeitungsmusters abgeglichen ist, um die Qualitätsasymmetrie zu minimieren.

6. Verfahren nach einem der vorhergehenden Ansprüche, wobei jeder Bereich eine oder mehrere Macroblock-Zeilen der ersten Ansicht oder der zweiten Ansicht ist.

7. Verfahren zur Bearbeitung von Videodaten, die mehrere Einzelbilder aufweisen, wobei jedes Einzelbild gemäß einer ersten Ansicht und einer zweiten Ansicht dargestellt ist, wobei jede Ansicht mehrere Bereiche aufweist, umfassend:
für jedes Einzelbild Einschätzen eines ersten Ansichtsbearbeitungsmusters und eines zweiten Ansichtsbearbeitungsmusters,
wobei der Schritt zum Einschätzen des ersten Ansichtsbearbeitungsmusters und des zweiten Ansichtsbearbeitungsmusters ein Ausführen einer Voranalyse an der ersten Ansicht und der zweiten Ansicht umfasst, um für jeden Bereich sowohl in der ersten Ansicht als auch in der zweiten Ansicht einen Codierungsparameter festzulegen,
für jedes Einzelbild asymmetrisches Bearbeiten der Bereiche der ersten Ansicht gemäß dem ersten Ansichtsbearbeitungsmuster und asymmetrisches Bearbeiten der Bereiche der zweiten Ansicht gemäß dem zweiten Ansichtsbearbeitungsmuster,
wobei der Schritt zum asymmetrischen Bearbeiten der Bereiche der ersten Ansicht gemäß dem ersten Ansichtsbearbeitungsmuster den Schritt zum asymmetrischen Codieren der Bereiche der ersten Ansicht umfasst und das asymmetrische Bearbeiten der Bereiche der zweiten Ansicht gemäß einem zweiten Ansichtsbearbeitungsmuster den Schritt zum asymmetrischen Codieren der Bereiche der zweiten Ansicht umfasst,
wobei der Schritt zum asymmetrischen Codieren der Bereiche der ersten Ansicht und der Bereiche der zweiten Ansicht den Schritt zum Verändern des Codierungsparameters von Bereich zu Bereich der ersten Ansicht und zum Verändern des Codierungsparameters von Bereich zu Bereich der zweiten Ansicht umfasst, wobei sich für jedes Einzelbild das erste Ansichtsbearbeitungsmuster vom zweiten Ansichtsbearbeitungsmuster unterscheidet,
wobei die Ansichtsbereiche auf einer Objektsegmentierung beruhen oder Tiefenbereiche sind, die über eine Disparitätssegmentierung abgeschätzt wurden.

8. Verfahren zur Codierung von Videodaten, umfassend:
Bereitstellen von Videodaten, die eine erste Ansicht und eine zweite Ansicht darstellen, wobei jede Ansicht mehrere Farbkomponenten aufweist, und
asymmetrisches Codieren der Farbkomponenten der ersten Ansicht gemäß einem ersten Ansichtscodierungsmuster und asymmetrisches Codieren der Farbkomponenten der zweiten Ansicht gemäß einem zweiten Ansichtsbearbeitungsmuster,
wobei der Schritt zum asymmetrischen Codieren der Farbkomponenten der ersten Ansicht gemäß dem ersten Ansichtscodierungsmuster den Schritt zum Verändern eines Codierungsparameters von Bereich zu Bereich der ersten Ansicht umfasst und der Schritt zum asymmetrischen Codieren der Farbkomponenten der zweiten Ansicht gemäß dem zweiten Ansichtscodierungsmuster den Schritt zum Verändern eines Codierungsparameters von Bereich zu Bereich der zweiten Ansicht umfasst,
wobei sich das erste Ansichtsbearbeitungsmuster vom zweiten Ansichtsbearbeitungsmuster unterscheidet,
wobei die Ansichtsbereiche auf einer Objektsegmentierung beruhen oder Tiefenbereiche sind, die über eine Disparitätssegmentierung abgeschätzt wurden.

9. System mit Mitteln zum Ausführen eines Verfahrens nach einem oder mehreren der Ansprüche 1-8.

10. Vorrichtung mit:
einem Prozessor und
einem computerlesbaren Speichermedium, das codierte Anweisungen aufweist, die damit konkret codiert wurden, welche beim Ausführen durch den Prozessor den Prozessor veranlassen, steuern, programmieren oder konfigurieren, ein Verfahren nach einem oder mehreren der Ansprüche 1-8 auszuführen.

11. Computerlesbares Speichermedium, das codierte Anweisungen aufweist, die damit konkret codiert wurden, welche beim Ausführen durch einen Prozessor den Prozessor veranlassen, steuern, programmieren oder konfigurieren, ein Verfahren nach einem oder mehreren der Ansprüche 1-8 auszuführen, zu veranlassen oder zu steuern.

## Revendications

1. Procédé de traitement de données vidéo, comprenant les étapes consistant à :
fournir des données vidéo représentant une première vue et une deuxième vue, chaque vue comprenant une pluralité de régions ; et
traiter de manière asymétrique les régions de la première vue selon un premier modèle de traitement de vue et traiter de manière asymétrique les régions de la deuxième vue selon un deuxième modèle de traitement de vue ;
dans lequel l'étape consistant à traiter de manière asymétrique les régions de la première vue selon le premier modèle de traitement de vue comprend l'étape consistant à coder de manière asymétrique les régions de la première vue, et l'étape consistant à traiter de manière asymétrique les régions de la deuxième vue selon le deuxième modèle de traitement de vue comprend l'étape consistant à coder de manière asymétrique les régions de la deuxième vue ;
dans lequel l'étape consistant à coder de manière asymétrique les régions de la première vue et les régions de la deuxième vue comprend l'étape consistant à faire varier un paramètre de codage d'une région à l'autre de la première vue et à faire varier un paramètre de codage d'une région à l'autre de la deuxième vue,
dans lequel le premier modèle de traitement de vue est différent du deuxième modèle de traitement de vue,
dans lequel les régions de vue reposent sur la segmentation d'objets ou sont des régions de profondeur estimées par segmentation de disparité.

2. Procédé selon la revendication 1, dans lequel l'étape consistant à traiter de manière asymétrique les régions de la première vue et de la deuxième vue comprend l'étape consistant à filtrer préalablement, de manière asymétrique, les régions de la première vue et de la deuxième vue.

3. Procédé selon la revendication 1, dans lequel le paramètre de codage comprend un ou plusieurs des éléments suivants : un paramètre de quantification, un mode de codage, des matrices de quantification, un arrondi de quantification, un seuillage de quantification, l'application de différents paramètres lagrangiens.

4. Procédé selon la revendication 3, dans lequel le codage asymétrique de la première vue selon le premier modèle de traitement de vue est équilibré par rapport au codage asymétrique de la deuxième vue selon le deuxième modèle de traitement de vue pour réduire au minimum l'asymétrie de qualité.

5. Procédé selon la revendication 1 ou 2, dans lequel le premier modèle de traitement de vue est équilibré par rapport au deuxième modèle de traitement de vue pour réduire au minimum l'asymétrie de qualité.

6. Procédé selon l'une quelconque des revendications précédentes, dans lequel chaque région consiste en une ou plusieurs rangées de macroblocs de la première vue ou de la deuxième vue.

7. Procédé de traitement de données vidéo composées d'une pluralité d'images, chaque image étant représentée selon une première vue et une deuxième vue, chaque vue comprenant une pluralité de régions, comprenant les étapes consistant à :
pour chaque image, évaluer un premier modèle de traitement de vue et un deuxième modèle de traitement de vue ;
dans lequel l'étape consistant à évaluer le premier modèle de traitement de vue et le deuxième modèle de traitement de vue comprend l'étape consistant à effectuer une analyse préalable sur la première vue et la deuxième vue pour déterminer un paramètre de codage pour chaque région de la première vue et chaque région de la deuxième vue ;
pour chaque image, traiter de manière asymétrique les régions de la première vue selon le premier modèle de traitement de vue et traiter de manière asymétrique les régions de la deuxième vue selon le deuxième modèle de traitement de vue ;
dans lequel l'étape consistant à traiter de manière asymétrique les régions de la première vue selon le premier modèle de traitement de vue comprend l'étape consistant à coder de manière asymétrique les régions de la première vue, et l'étape consistant à traiter de manière asymétrique les régions de la deuxième vue selon le deuxième modèle de traitement de vue comprend l'étape consistant à coder de manière asymétrique les régions de la deuxième vue ;
dans lequel l'étape consistant à coder de manière asymétrique les régions de la première vue et les régions de la deuxième vue comprend l'étape consistant à faire varier le paramètre de codage d'une région à l'autre de la première vue et à faire varier le paramètre de codage d'une région à l'autre de la deuxième vue,
dans lequel, pour chaque image, le premier modèle de traitement de vue est différent du deuxième modèle de traitement de vue,
dans lequel les régions de vue reposent sur la segmentation d'objets ou sont des régions de profondeur estimées par segmentation de disparité.

8. Procédé de codage de données vidéo, comprenant les étapes consistant à :
fournir des données vidéo représentant une première vue et une deuxième vue, chaque vue comprenant une pluralité de composantes de couleur ; et
coder de manière asymétrique les composantes de couleur de la première vue selon un premier modèle de traitement de vue et coder de manière asymétrique les composantes de couleur de la deuxième vue selon un deuxième modèle de codage de vue ;
dans lequel l'étape consistant à coder de manière asymétrique les composantes de couleur de la première vue selon le premier modèle de codage de vue comprend l'étape consistant à faire varier un paramètre de codage d'une région à l'autre de la première vue, et l'étape consistant à coder de manière asymétrique les composantes de couleur de la deuxième vue selon le deuxième modèle de codage de vue comprend l'étape consistant à faire varier un paramètre de codage d'une région à l'autre de la deuxième vue,
dans lequel le premier modèle de codage de vue est différent du deuxième modèle de codage de vue,
dans lequel les régions de vue reposent sur la segmentation d'objets ou sont des régions de profondeur estimées par segmentation de disparité.

9. Système, comprenant : un moyen pour mettre en oeuvre un procédé selon une ou plusieurs des revendications 1 à 8.

10. Appareil, comprenant :
un processeur ; et
un support de stockage lisible par ordinateur, sur lequel des instructions codées sont codées de manière tangible, qui, lorsqu'elles sont exécutées par un processeur, réalisent, commandent, programment ou configurent la mise en oeuvre, par le processeur, d'un procédé selon une ou plusieurs des revendications 1 à 8.

11. Support de stockage lisible par ordinateur, sur lequel des instructions codées sont codées de manière tangible, qui, lorsqu'elles sont exécutées par un processeur, réalisent, commandent, programment ou configurent la mise en oeuvre, la réalisation ou la commande, par le processeur, d'un procédé selon une ou plusieurs des revendications 1 à 8.
